# DEMANDE DE BREVET EUROPEEN

(11) **EP 3 155 943 A1**
(43) Date de publication de la demande: **19.04.2017**
(21) Numéro de dépôt: 16193344.5
(22) Date de dépôt: 11.10.2016
(51) Int. Cl.: A47K 3/40, B29C 43/02, B29C 44/56, B29C 51/14, B29C 43/20, B29C 43/52

(54) **PROCEDE DE FABRICATION D'UN BAC RECEVEUR DE DOUCHE A PARTIR D'UN PANNEAU COMPOSITE**

(30) Priorité: 12.10.2015 FR 1559672
(71) Demandeur: ASM, 44350 Guerande (FR); Davoudi, Farhooman, 77680 Roissy En Brie (FR)
(72) Inventeur: DAVOUDI, Farhooman, 77680 Roissy en Brie (FR)
(74) Mandataire: Argyma

(57) **Abrégé**

La présente invention a pour objet un procédé de fabrication d'un bac receveur de douche, à partir d'un panneau composite (1) de type « sandwich », auquel il est appliqué un masque correspondant à une empreinte permettant d'imprimer, dans l'épaisseur de la tranche de mousse (4) de renfort dudit panneau composite (1), les évidements (10) voulus pour former ledit bac receveur de douche. A cette fin, la plaque du dessus (3) du panneau composite (1) est chauffée localement, uniquement au niveau des zones correspondant aux évidements (10) à imprimer, de façon à permettre la déformation de ladite plaque du dessus (3) et l'aménagement desdits évidements (10) dans l'épaisseur de la tranche de mousse (4).

## Description

### DOMAINE TECHNIQUE ET OBJET DE L'INVENTION

L'invention concerne un procédé original et économique pour fabriquer un bac receveur de douche à partir d'un panneau composite de type « sandwich ».

Plus précisément, la présente invention est relative à la fabrication d'un bac de receveur de douche de façon rapide et économe en énergie et en temps par l'intermédiaire d'une technique comprenant en particulier le chauffage local de la plaque du dessus d'un panneau composite et la mise en pression, contre ladite plaque du dessus chauffée localement, d'un moule formant un masque correspondant à l'empreinte des évidements à imprimer dans ledit panneau composite pour former ledit bac receveur de douche.

### ETAT DE LA TECHNIQUE

La problématique générale concerne la fabrication de bacs receveurs de douche en matériau plastique.

A cet effet, il est connu de recourir à des techniques de thermoformage pour obtenir une plaque marquée de l'empreinte correspondant aux évidements voulus, la plaque thermoformée étant ensuite renforcée, séchée et découpée pour former un bac receveur de douche présentant la forme et les dimensions souhaitées.

En pratique, la technique de thermoformage consiste, comme le sait l'homme du métier, à chauffer l'intégralité d'une large plaque, typiquement en matériau plastique, pour la ramollir, en vue de la façonner selon la forme voulue, à l'aide d'un moule, ladite plaque ayant été rendue ductile, grâce au chauffage, sur toute sa surface.

Après un long temps de séchage et de refroidissement, la large plaque thermoformée est renforcée, par exemple à l'aide de fibre de verre ou de mousse polyuréthane, afin de lui conférer une résistance mécanique satisfaisante.

Il est à noter que cette étape de renforcement est indispensable, car la plaque de plastique mise en forme par thermoformage ne peut pas, sans cela, présenter de résistance mécanique acceptable, en particulier pour un bac receveur de douche.

Ainsi, après séchage et refroidissement de la plaque en matériau plastique mise en forme par thermoformage et renforcée, la pièce obtenue est découpée pour réaliser des bordures propres et aboutir à un bac receveur de douche présentant les dimensions voulues.

Cette technique connue engendre donc à la fois une consommation d'énergie très élevée, du fait de la mise en oeuvre d'un procédé de thermoformage, et une importante pollution connexe, en raison des chutes découlant des découpes rendues nécessaires pour former un bac receveur de douche aux dimensions voulues.

Il existe donc un besoin pour un procédé de fabrication de bacs receveurs de douche moins polluant et plus économe en énergie.

A cette fin, la présente invention propose un procédé de fabrication de bacs receveurs de douche comprenant la réalisation d'un moule formant un masque correspondant à l'empreinte d'évidements voulus, ledit masque étant « imprimé » dans l'épaisseur de la mousse d'un panneau composite de type « sandwich », à travers l'enfoncement d'une plaque supérieure dudit panneau composite, préalablement chauffée de façon localisée, en vue de légèrement ramollir uniquement des zones de ladite plaque supérieure correspondantes aux évidements prévus pour être « imprimés en profondeur » à l'aide d'une empreinte.

Le masque est ainsi « imprimé » dans l'épaisseur de la mousse du panneau composite par l'intermédiaire d'une technique de thermocompression.

Le procédé selon l'invention évite ainsi, d'une part, de devoir chauffer l'intégralité d'une plaque en matériau plastique, et permet donc d'économiser également le temps de séchage et de refroidissement associé, et, d'autre part, la pollution connexe induite par le renforcement et le découpage de panneaux thermoformés, du fait de l'utilisation de panneaux composites de type « sandwich », préalablement renforcés.

### PRESENTATION GENERALE DE L'INVENTION

A cet effet, plus précisément, l'invention concerne un procédé de fabrication d'un bac receveur de douche comprenant les étapes suivantes :
- la réalisation d'un panneau composite de type « sandwich », comprenant une plaque du dessus plane en plastique, située à l'opposé d'une plaque du dessous plane en plastique, la plaque du dessous étant destinée à se trouver du côté du sol une fois le bac receveur de douche achevé et installé, la plaque du dessus étant séparée de la plaque du dessous par une tranche de mousse, en polystyrène expansé par exemple, présentant une épaisseur,

- la réalisation d'un moule formant une empreinte d'évidements à imprimer en profondeur dans le panneau composite,
- le chauffage localisé de la plaque du dessus du panneau composite, pour chauffer et ramollir uniquement des zones correspondant à l'empreinte des évidements à imprimer dans le panneau composite,
- l'application de l'empreinte sur la plaque du dessus chauffée de façon localisée, de manière à imprimer l'empreinte des évidements correspondants, ladite empreinte des évidements étant aménagée dans l'épaisseur de la tranche de mousse, la plaque du dessous restant plane, les zones correspondant à l'empreinte des évidements étant chauffées de façon à ramollir lesdites zones de la plaque du dessus, de sorte que l'application de l'empreinte entraîne une déformation et un enfoncement de la plaque du dessus en correspondance avec l'empreinte des évidements, et la tranche de mousse présentant une densité adaptée pour permettre l'impression de l'empreinte des évidements dans l'épaisseur de ladite tranche de mousse,
- le refroidissement du panneau composite présentant l'empreinte des évidements voulus, pour former le bac receveur de douche.

Un avantage essentiel du procédé selon l'invention par rapport au procédé connu de thermoformage consiste en la diminution très importante de la consommation d'énergie induite par la fabrication de bacs receveurs de douche. L'énergie consommée par la fabrication d'un bac receveur de douche peut ainsi être divisée par 100 par rapport à la mise en oeuvre d'une technique de thermoformage classique. A l'avantage économique et écologique que cela induit s'ajoutent un gain de temps, puisque qu'il est requis un temps de chauffage beaucoup plus court et quasiment pas de séchage. Un avantage induit réside en outre dans la possibilité de mettre en oeuvre le procédé de fabrication selon l'invention sur une ligne de production courte et compacte, libérée des volumineux moyens de chauffages et autres étuves indispensables à la mise en oeuvre des techniques classiques de thermoformage.

Un autre avantage du procédé selon l'invention réside dans l'utilisation de panneaux composites de type « sandwich », renforcés par une tranche de mousse, présentant une bonne résistance mécanique, constante même en cas de découpe.

De plus, lors de la mise en oeuvre du procédé selon l'invention, la partie de la plaque du dessus non chauffée reste d'aspect lisse et net, alors que dans l'état de la technique, même les parties destinées à rester planes sont chauffées puis refroidies, au risque de leur conférer un aspect gondolé.

En particulier, la plaque du dessous reste parfaitement plane car l'empreinte est configurée de façon à ce que les évidements voulus soient aménagées dans l'épaisseur de la tranche de mousse.

Un autre avantage du procédé de fabrication selon l'invention réside dans la possibilité de réaliser des bacs receveurs de douche sur-mesure, sans limitation de forme induite par ledit procédé de fabrication.

Selon un mode de réalisation préféré, avant l'étape de chauffage, le procédé selon l'invention comprend une étape de mise en place d'un écran thermique pour protéger la partie de la plaque du dessus ne correspondant pas à des zones correspondant à l'empreinte des évidements à imprimer, ladite partie de la plaque du dessus étant ainsi préservée de tout ramollissement.

Selon un mode de réalisation, le procédé comprend par ailleurs une étape initiale et / ou une étape finale de découpe du panneau composite aux dimensions voulues du bac receveur de douche.

Selon un mode de réalisation, l'étape d'application du masque sur la plaque du dessus du panneau composite chauffée de façon localisée consiste à la mise sous pression du moule contre ladite plaque du dessus, après l'étape de chauffage ou simultanément à l'étape de chauffage, avec une pression comprise entre environ 4 et environ 5 kilos par centimètre carré.

Selon un mode de réalisation avancé, la réalisation du panneau composite comporte une étape de préformage de la tranche de mousse, préalable à une étape de collage de la plaque de dessus et de la plaque du dessous de part et d'autre de ladite tranche de mousse, de manière à imprimer dans l'épaisseur de ladite tranche de mousse une empreinte primaire correspondant aux évidements du masque.

Selon un mode de réalisation particulier, le procédé selon l'invention comprend par ailleurs une étape de mise en place d'au moins un profilé soudable pour masquer les tranches de mousse et créer une bordure d'étanchéité du receveur, et une étape de soudure plastique dudit au moins un profilé soudable sur le bac receveur de douche.

Avantageusement, la plaque du dessus et la plaque du dessous peuvent être réalisée en différents matériaux, la plaque du dessous pouvant être, par exemple, en acrylique et la plaque du dessus, par exemple, en aluminium, en acrylique, en ABS (pour acrylonitrile butadiène styrène), ou en PVC (pour Polychlorure de vinyle), ladite plaque du dessous et ladite plaque du dessus étant séparées par la tranche de mousse présentant une épaisseur.

Selon un mode de réalisation, la tranche de mousse est en polystyrène.

Selon un autre mode de réalisation, la tranche de mousse est en polyuréthane ou, selon cas particulier, en résine thermoformable à faible épaisseur.

Selon un autre mode de réalisation, la tranche de mousse est constituée d'un polymère ou d'une résine adapté pour faciliter la prise de l'empreinte.

### DESCRIPTION DES FIGURES

L'invention sera mieux comprise à la lecture de la description qui va suivre, donnée uniquement à titre d'exemple, et se référant aux dessins annexés sur lesquels :
- la figure 1 représente un exemple de bac receveur de douche fabriqué conformément au procédé selon l'invention ;
- la figure 2 représente une vue éclatée d'un bac receveur de douche complet, fabriqué au moyen du procédé selon l'invention.

### DESCRIPTION DETAILLEE DE L'INVENTION

L'invention est présentée principalement pour une application à la fabrication de bacs receveurs de douche mais son application pour la fabrication d'autres bacs sanitaires, tels que des lavabos ou des baignoires, est également couverte par la présente invention.

En premier lieu, comme évoqué précédemment, le procédé de fabrication de bacs receveurs de douche selon l'invention prévoit l'utilisation de panneaux composites de type « sandwich », de préférence de structure préalablement renforcée.

De tels panneaux composites de type « sandwich » comprennent deux plaques, soit une plaque du dessus et une plaque du dessous, qui peuvent être réalisées en différents matériaux, séparées par une tranche de mousse présentant une épaisseur. Par exemple, la plaque du dessous peut être en acrylique et la plaque du dessus en aluminium, en acrylique, en ABS, ou en PVC par exemple. La tranche de mousse peut par exemple être constituée de polystyrène expansé.

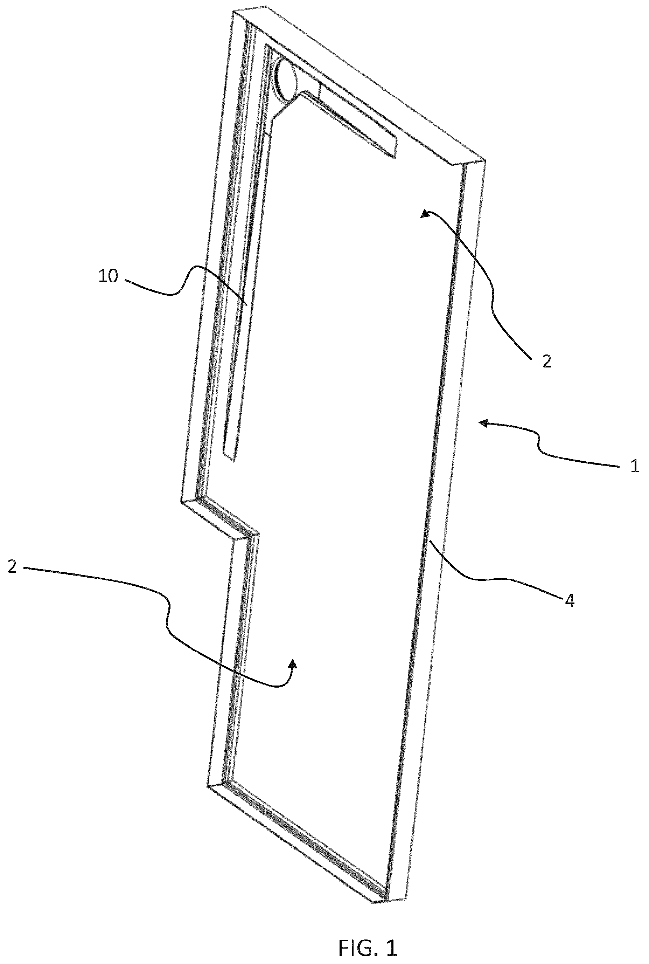

En référence à la figure 1, le procédé de fabrication de bacs receveurs de douche selon l'invention prévoit donc la réalisation de panneaux composites 1 présentant des dimensions adaptées.

Un tel panneau composite de type « sandwich » présente une plaque du dessous 2, plane, destinée à rester plane au terme du processus de fabrication et à se trouver du côté de sol une fois le bac receveur de douche installé.

A l'opposé de la plaque du dessous 2, le panneau composite 1 présente une plaque du dessus 3. Les plaques du dessous 2 et du dessus 3 sont en résine plastique, par exemple en acrylique ou en ABS. Toutes deux sont collées, respectivement, de part et d'autre d'une tranche de mousse de renfort 4, par exemple en polyuréthane ou en polystyrène expansé, ou encore en mousse PVC (pour Polychlorure de Vinyle) ou en tout autre matériau similaire, présentant les caractéristique mécaniques, en termes de résistance et de densité notamment, adaptées pour l'application envisagée, à savoir le renforcement de panneaux composites destinées à former des bacs receveurs de couche, avec ce que cela implique du point de vue de la résistance mécanique nécessaire.

Dès à présent, il est à noter un avantage important que l'utilisation de panneaux composites de type « sandwich », renforcés par de la mousse, présente par rapport aux techniques connues de thermoformage de plaques en résine, en vue de former des plaques supérieures de bacs receveurs de douche. En effet, les bacs receveurs de douche fabriqués selon les procédés de thermoformage traditionnels sont généralement constitués d'acrylique renforcé à la fibre de verre. Ces bacs sont fragilisés par les découpes nécessaires à réaliser après thermoformage et renforcement, afin de produire des bacs receveurs de douche aux dimensions voulues. Ils perdent en effet, lors de ces découpes, une partie de leur résistance mécanique. Au contraire, les panneaux composites de type « sandwich », mis en oeuvre dans la présente invention, peuvent être découpés librement sans impact négatif sur leur résistance mécanique.

A partir d'un tel panneau composite de type « sandwich », la présente invention prévoit, comme indiqué précédemment, les étapes successives suivantes :
- la réalisation d'un moule formant un masque correspondant à l'empreinte d'évidements 10 à imprimer dans le panneau composite pour former le bac receveur de douche,
- le chauffage localisé de la plaque du dessus 3 du panneau composite 1, pour chauffer et ramollir uniquement les zones de ladite plaque du dessus 3 correspondant à l'empreinte des évidements 10 à imprimer dans le panneau composite 1,

- l'application du masque sur la plaque du dessus chauffée de façon localisée, de manière à imprimer l'empreinte des évidements 10 correspondants, ladite empreinte des évidements étant aménagée dans l'épaisseur de la tranche de mousse 4, la plaque du dessous 2 restant plane, les zones de la plaque du dessus 3 correspondant à l'empreinte des évidements étant chauffées de façon à ramollir lesdites zones de la plaque du dessus 3, de sorte que l'application du masque, typiquement par mise en pression, entraîne une déformation et un enfoncement de la plaque du dessus 3 en correspondance avec l'empreinte des évidements 10, et la tranche de mousse 4 présentant une densité adaptée pour permettre l'impression de l'empreinte des évidements 10 dans l'épaisseur de ladite tranche de mousse 4,
- étant donné que l'étape de séchage n'existe pas, le refroidissement du panneau composite 1 présentant l'empreinte des évidements 10 voulus, pour former le bac receveur de douche est donc plus rapide et économique.

De préférence, avant l'étape de chauffage, un écran thermique est mis en place pour protéger la partie de la plaque du dessus 3 ne correspondant pas à aux zones à chauffer pour permettre « l'impression en profondeur » de l'empreinte des évidements 10, ladite partie de la plaque du dessus étant ainsi préservée de tout échauffement et de tout ramollissement. L'avantage obtenu réside dans le fait que la partie non chauffée, protégée par l'écran thermique, et donc non ramollie, ne subit pas de déformation de sa surface lors d'un refroidissement. L'aspect de la partie non chauffée reste donc parfaitement lisse et net au terme du procédé de fabrication.

En pratique, selon le mode de réalisation préférentiel, le moule est chauffé à une température proche de celle des zones chauffées de la plaque du dessus, et pressé contre ladite plaque du dessus 3. Le chauffage de la plaque du dessus 3, et le cas échéant le chauffage du moule, et la mise en pression du moule contre ladite plaque du dessus 3 peuvent être simultanés. Alternativement, le chauffage est préalable à la mise en pression du moule contre la plaque du dessus 3.

Ainsi, de façon préférentielle, l'empreinte des évidements 10 est imprimée dans le panneau composite 1, dans l'épaisseur de la tranche de mousse 4, grâce à la technique de thermocompression décrite ci-dessus.

Il est à noter par ailleurs que l'utilisation de cette technique de thermocompression présente l'avantage, en particulier lorsque le moule est simultanément ou en tout cas rapidement pressé contre la plaque du dessus, que le chauffage localisé de la plaque du dessus 3 peut être effectué à une température inférieure à celle requise par la technique connue de thermoformage, qui nécessite un ramollissement complet de la plaque à façonner. Le fait de chauffer moins présente, outre l'intérêt économique et écologique, l'avantage de diminuer fortement le risque de subir une déformation de la surface lors du refroidissement de la plaque.

Ainsi, contrairement à la technique de thermoformage connue, il n'est pas nécessaire, dans le procédé selon l'invention, de chauffer et ramollir toute la surface de plaque du dessus 3. Seule les zones correspondant aux évidements 10 à « imprimer » sont chauffées et ramollies pour permettre que l'application, typiquement par mise en pression, du moule sur la plaque du dessus 3 du panneau composite aboutisse à l'impression dans l'épaisseur de la tranche de mousse 4 dudit panneau composite 1, de l'empreinte correspondant aux évidements 10 voulus.

De plus, l'utilisation d'un panneau composite de type sandwich, renforcé dès l'origine par de la mousse, permet d'obtenir un bac receveur de douche rapidement après une brève étape de refroidissement. Au contraire, les plaques thermoformées conformément à l'état de la technique doivent faire l'objet de coûteuses et longues étapes de séchage en de vastes étuves, puis de refroidissement, ainsi que d'un renforcement par de la mousse, polystyrène ou polyuréthane par exemple, ou par de la fibre de verre, avant, enfin, la réalisation de découpes aux dimensions voulues pour le bac receveur de douche.

Ces découpes, comme dit précédemment, engendrent au surplus une fragilisation du bac receveur de douche ainsi fabriqué.

Au contraire, le procédé selon l'invention permet l'utilisation de panneaux composites préparés aux dimensions souhaitées du receveur de douche. Le cas échant, des découpes du bac receveur de douche, fabriqué conformément à la présente invention, peuvent être réalisées pour la finition ou par l'installateur pour l'adapter à son emplacement de pose, sans induire de fragilisation du bac receveur de douche en raison de l'utilisation de panneaux composites renforcés.

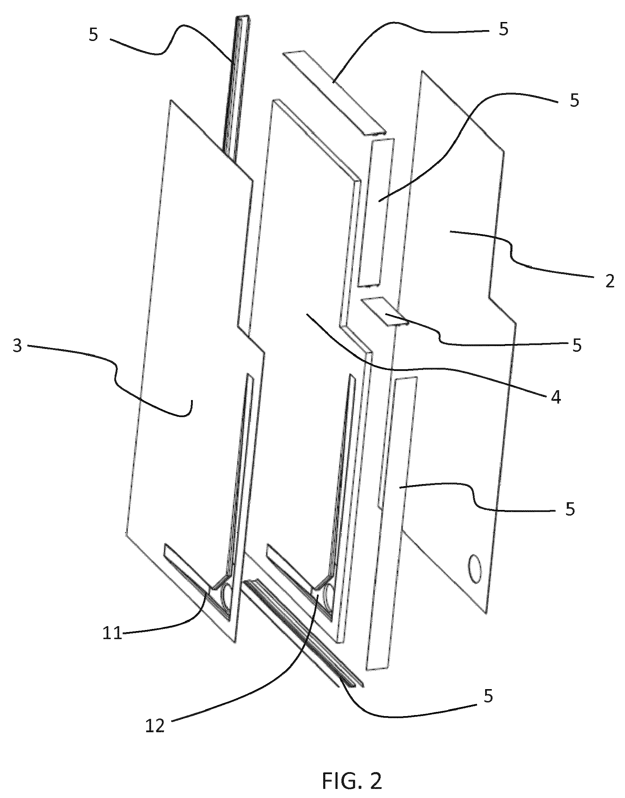

La figure 2 montre une vue éclatée d'un bac receveur de douche, fabriqué conformément au procédé selon l'invention. Le panneau composite formé de la plaque du dessous 2, de la plaque du dessus 3 et de la tranche de mousse 4 a reçu l'application du moule formant le masque correspondant aux évidements 11 (déformation de la plaque du dessus 2) et 12 (enfoncement des évidements dans l'épaisseur de la tranche de mousse 4) souhaités, imprimés dans l'épaisseur de la tranche de mousse 4 après déformation de la plaque du dessus 3.

Comme cela est visible dans le mode de réalisation représenté à la figure 2, des finitions sont réalisées à l'aide de profilés 5 mis en place de façon à masquer la tranche de mousse 4. De préférence, ces profilés 5 sont des profilés soudables rendus définitivement solidaires du panneau composite 1 - devenu un bac receveur de douche - par soudure plastique. Alternativement, les profilés 5 peuvent être des profilés, par exemple en matériau plastique, collés de façon à masquer la tranche de mousse 4.

Par ailleurs, selon un mode de réalisation avancé du procédé selon l'invention, il est prévu, lors de la fabrication des panneaux composites de type « sandwich », de préformer la tranche de mousse 4, en polystyrène de préférence ou, alternativement en polyuréthane ou constitué de tout autre polymère ou résine adapté, pour faciliter la prise de l'empreinte. Ainsi, en correspondance avec les évidements 11, 12 prévus pour être « imprimés » lors de l'application du masque contre la plaque du dessus 3 du panneau composite, la tranche de mousse 4 est préformée, par exemple creusée, de façon à favoriser l'enfoncement correspondant auxdits évidements 12, provoqué par l'application du masque. De cette façon, l'empreinte des évidements 11, 12 voulus pour le bac receveur de douche peut être plus efficacement imprimée dans l'épaisseur de la tranche de mousse 4.

En résumé, la présente invention concerne un procédé de fabrication d'un bac receveur de douche, à partir d'un panneau composite 1 de type « sandwich », auquel il est appliqué un masque correspondant à une empreinte permettant d'imprimer, dans l'épaisseur de la tranche de mousse 4 de renfort dudit panneau composite, les évidements 10 voulus pour former ledit bac receveur de douche. A cette fin, la plaque du dessus 3 du panneau composite 1 est chauffée localement, uniquement au niveau des zones correspondant aux évidements 10 à imprimer, de façon à permettre la déformation de ladite plaque du dessus 3 et l'aménagement desdits évidements dans l'épaisseur de la tranche de mousse 4.

Il est à noter, en outre, que l'invention n'est pas limitée aux modes de réalisation décrit à titre d'exemple et est susceptible de variantes à la portée de l'homme du métier.

## Revendications

1. Procédé de fabrication d'un bac receveur de douche comprenant les étapes suivantes :
- la réalisation d'un panneau composite (1) de type « sandwich », comprenant une plaque du dessus (3) plane en plastique, située à l'opposé d'une plaque du dessous (2) plane en plastique, la plaque du dessous (2) étant destinée à se trouver du côté du sol une fois le bac receveur de douche achevé et installé, la plaque du dessus (3) étant séparée de la plaque du dessous (2) par une tranche de mousse (4) présentant une épaisseur,
- la réalisation d'un moule formant une empreinte d'évidements (10) à imprimer en profondeur dans le panneau composite (1),
- le chauffage localisé de la plaque du dessus (3) du panneau composite (1), pour chauffer et ramollir uniquement des zones correspondant à l'empreinte des évidements (10) à imprimer dans le panneau composite (1),
- l'application de l'empreinte sur la plaque du dessus (3) chauffée de façon localisée, de manière à imprimer en profondeur l'empreinte des évidements (10) correspondants, ladite empreinte des évidements étant aménagée dans l'épaisseur de la tranche de mousse (4), la plaque du dessous (2) restant plane, les zones correspondant à l'empreinte des évidements (10) étant chauffées de façon à ramollir lesdites zones de la plaque du dessus (3), de sorte que l'application de l'empreinte entraîne une déformation et un enfoncement de la plaque du dessus (3) en correspondance avec l'empreinte des évidements (10), et la tranche de mousse (4) présentant une densité adaptée pour permettre l'impression de l'empreinte des évidements dans l'épaisseur de ladite tranche de mousse (4),
- le refroidissement du panneau composite (1) présentant l'empreinte des évidements (10) voulus, pour former le bac receveur de douche.

2. Procédé de fabrication d'un bac receveur de douche selon la revendication 1, comprenant, avant l'étape de chauffage, une étape de mise en place d'un écran thermique pour protéger la partie de la plaque du dessus (3) ne correspondant pas à des zones correspondant à l'empreinte des évidements (10) à imprimer en profondeur, ladite partie de la plaque du dessus étant ainsi préservée de tout ramollissement.

3. Procédé de fabrication d'un bac receveur de douche selon l'une des revendications précédentes, comprenant par ailleurs une étape initiale et / ou une étape finale de découpe du panneau composite (1) aux dimensions voulues du bac receveur de douche.

4. Procédé de fabrication d'un bac receveur de douche selon l'une des revendications précédentes, dans lequel l'étape d'application du masque sur la plaque du dessus (3) du panneau composite (1) chauffée de façon localisée consiste à la mise sous pression dudit moule contre ladite plaque du dessus (3), après l'étape de chauffage ou simultanément à l'étape de chauffage, avec une pression comprise entre environ 4 ou environ 5 kilos par centimètre carré.

5. Procédé de fabrication d'un bac receveur de douche selon l'une des revendications précédentes, dans lequel la réalisation du panneau composite (1) comporte une étape de préformage de la tranche de mousse (4), préalable à une étape de collage de la plaque de dessus (3) et de la plaque du dessous (2) de part et d'autre de ladite tranche de mousse (4), de manière à imprimer dans l'épaisseur de ladite tranche de mousse (4) une empreinte primaire correspondant aux évidements du masque.

6. Procédé de fabrication d'un bac receveur de douche selon l'une des revendications précédentes, comprenant par ailleurs une étape de mise en place d'au moins un profilé soudable (5) pour masquer la tranche de mousse (4) et créer une bordure d'étanchéité du bac receveur de douche, et une étape de soudure plastique dudit au moins un profilé soudable (5) sur le bac receveur de douche.

7. Procédé de fabrication d'un bac receveur de douche selon l'une des revendications précédentes, la plaque du dessous (2) est en acrylique et la plaque du dessus (3) est en aluminium ou en acrylique ou en ABS ou en PVC, ladite plaque du dessous (2) et ladite plaque du dessus (3) étant séparées par la tranche de mousse (4) présentant une épaisseur.

8. Procédé de fabrication d'un bac receveur de douche selon l'une des revendications précédentes, dans lequel la tranche de mousse (4) est en polystyrène expansé.

9. Procédé de fabrication d'un bac receveur de douche selon l'une des revendications 1 à 7, dans lequel la tranche de mousse (4) est en polyuréthane.

10. Procédé de fabrication d'un bac receveur de douche selon l'une des revendications précédentes, dans lequel la tranche de mousse (4) est constituée d'un polymère ou d'une résine adapté pour faciliter la prise de l'empreinte.
